# EUROPÄISCHE PATENTSCHRIFT

(11) **EP 0 889 064 B1**
(45) Veröffentlichungstag und Bekanntmachung des Hinweises auf die Patenterteilung: **28.12.2005**
(21) Anmeldenummer: 98110615.6
(22) Anmeldetag: 10.06.1998
(51) Int. Cl.: C08F 10/00, C08F 297/08, B01J 19/18, B01J 4/00, B01J 8/08

(54) **Verfahren zur Polymerisation von C2-C8-Alk-1-enen mittels eines Ziegler-Natta-Katalysatorsystems**
Process for the polymerization of C2-C8 alk-1-enes using a Ziegler-Natta catalyst system
Procédé de polymérisation d'alcènes C2-C8 utilisant un système catalytique de type Ziegler-Natta

(30) Priorität: 02.07.1997 DE 19728141
(43) Veröffentlichungstag der Anmeldung: 07.01.1999
(73) Patentinhaber: Basell Poliolefine Italia S.r.l., 20124 Milano (IT)
(72) Erfinder: Kersting, Meinolf, Dr., 67435 Neustadt (DE); Lutz, Gerald, Dr., 64295 Darmstadt (DE); Langhauser, Franz, Dr., 67152 Ruppertsberg (DE)
(74) Vertreter: Colucci, Giuseppe

(56) Entgegenhaltungen:
- EP-A- 0 192 427
- EP-A- 0 234 672
- EP-A- 0 749 992
- DE-A- 19 529 240
- US-A- 5 461 115

## Beschreibung

Die vorliegende Erfindung betrifft ein Verfahren zur Polymerisation von C₂-C₈-Alk-1-enen mittels eines Ziegler-Natta-Katalysatorsystems in einer Reaktorkaskade aus mindestens zwei Reaktoren, wobei man in einem Reaktor R_{A}, dem ein oder mehrere weitere Reaktoren vorgeschaltet sein können, ein Homo- oder Copolymerisat von C₂-C₈-Alk-1-enen herstellt, das Reaktionsgemisch aus R_{A} austrägt und in einen nächsten Reaktor R_{B} überführt und die Polymerisation in R_{B} sowie den Reaktoren, die sich an R_{B} anschließen können, zur Regelung der Katalysatoraktivität in Gegenwart eines flüssigen oder sich in Lösung befindenden Regulators durchführt.

Polymerisate von C₂-C₈-Alk-1-enen können sowohl durch Flüssigphasenpolymerisation als auch durch Polymerisation einer Aufschlämmung oder durch Gasphasenpolymerisation hergestellt werden. Da sich das entstehende feste Polymerisat leicht vom gasförmigen Reaktionsgemisch abtrennen läßt, wird in zunehmendem Maß aus der Gasphase heraus polymerisiert. Die Polymerisation wird dabei mit Hilfe eines Ziegler-Natta-Katalysatorsystems durchgeführt, welches üblicherweise aus einer titanhaltigen Feststoffkomponente, einer organischen Aluminiumverbindung und einer organischen Silanverbindung besteht (EP-B 45 977, EP-A 171 200, US-A 4 857 613, US-A 5 288 824).

Zu den Polymerisaten von C₂-C₈-Alk-1-enen zählen die entsprechenden Homopolymerisate, Copolymerisate sowie sogenannte Block- oder Impactcopolymerisate. Letztere sind meist Gemische aus verschiedenen Homo- bzw. Copolymerisaten von C₂-C₈-Alk-1-enen, die sich vor allem durch eine gute Schlagzähigkeit auszeichnen. Sie werden gewöhnlich in sogenannten Reaktor-Kaskaden aus mindestens zwei hintereinandergeschalteten Reaktoren und oft in einem mindestens zweistufigen Prozeß hergestellt, wobei das in einem ersten Reaktor erhaltene Polymerisat in Anwesenheit von noch aktiven Ziegler-Natta-Katalysatorbestandteilen in einen zweiten Reaktor übergeführt wird, in dem diesem weitere Monomere hinzupolymerisiert werden.

Bei der Herstellung einiger Polymerisate von C₂-C₈-Alk-1-enen in Reaktorkaskaden, insbesondere bei der Polymerisationen von Polypropylen-Blockcopolymerisaten mit mehr als 20 Gew.-% eines Propylen-Ethylen-Copolymerisats mit Ethylengehalten zwischen 15 und 80 Gew.-%, beobachtet man im Reaktor häufig das Auftreten von Brocken oder Agglomeraten der Polymerpartikel sowie die Bildung von Belägen und Anwachsungen an den Reaktorwänden und -einbauten. Diese Belagbildung erschwert die Temperatur- und Reaktionssteuerung bei der Copolymerisation. Dies hat zur Folge, daß die Reaktorlaufzeiten verkürzt werden müssen, um in jedem Fall einen kontrollierten Reaktionsablauf gewährleisten zu können. Kürzere Reaktoriaufzeiten wiederum bewirken eine Erhöhung der Rüstzeiten und damit der Produktionskosten, so daß die Belagbildung die Wirtschaftlichkeit der Herstellung derartiger Copolymerisate beeinträchtigt.

Aus der US-A 47 39 015, der DE-A 41 19 345 und der DE-A 44 32 798 sind Verfahren zur Herstellung von Propylen-Ethylen-Copolymerisaten bekannt, bei denen durch den Einsatz einer die Katalysatoraktivität regelnden Verbindung wie eines Alkanols die Belagbildung deutlich reduziert wird. In der US-A 47 39 015 erfolgt die Zugabe der sich in flüssigem Zustand befindenden Regulatoren entweder direkt oder verdünnt mit einem Lösungsmittel oder bevorzugt verdünnt mit einem Gas in das Reaktionssystem der zweiten Polymerisationsstufe. In der DE-A 41 19 345 und der DE-A 44 32 798 wird das Alkanol unmittelbar zum Reaktionsgemisch der zweiten Polymerisationsstufe zugegeben. Bei diesen Verfahren gelingt es jedoch immer noch nicht, die Belagbildung vollständig zu vermeiden.

Der vorliegenden Erfindung lag daher die Aufgabe zugrunde, den geschilderten Nachteilen abzuhelfen und ein Verfahren zu entwikkeln, welches die Neigung zur Agglomeration der Polymerpartikel und zur Belagbildung weiter vermindert bzw. vollständig unterdrückt.

Demgemäß wurde ein Verfahren zur Polymerisation von C₂-C₈-Alk-1-enen mittels eines Ziegler-Natta-Katalysatorsystems in einer Reaktorkaskade aus mindestens zwei Reaktoren gefunden, wobei man in einem Reaktor R_{A}, dem ein oder mehrere weitere Reaktoren vorgeschaltet sein können, ein Homo- oder Copolymerisat von C₂-C₈-Alk-1-enen herstellt, das Reaktionsgemisch aus R_{A} austrägt und in einen nächsten Reaktor R_{B} überführt und die Polymerisation in R_{B} sowie den Reaktoren, die sich an R_{B} anschließen können, zur Regelung der Katalysatoraktivität in Gegenwart eines flüssigen oder sich in Lösung befindenden Regulators durchführt, das sich dadurch auszeichnet, daß man den Regulator dem Reaktionsgemisch nach Austrag aus R_{A} und vor Eintrag in R_{B} hinzufügt und worin der Regulator aus Wasser, Phenole, Carbonsäuren, Sulfonsäuren, Primäre oder Sekundäre Amine, Methanol, Ethanol, n-Propanol, Isopropanol, n-Butanol, Tert-Butanol, n-Hexanol, n-Oktanol, Cyclohexanol, Benzylalkohol und Glycerin ausgewählt ist.

Als C₂-C₈-Alk-1-ene können im erfindungsgemäßen Verfahren insbesondere Ethylen, Propylen, But-1-en, Pent-1-en, Hex-1-en, Hept-1-en oder Oct-1-en verwendet werden, wobei Ethylen, Propylen oder But-1-en bevorzugt eingesetzt werden. Das Verfahren kommt zur Herstellung von Homopolymerisaten der C₂-C₈-Alk-1-ene oder von Copolymerisaten der C₂-C₈-Alk-1-ene, bevorzugt mit bis zu 30 Gew.-% einpolymerisierter anderer Alk-1-ene mit bis zu 8 C-Atomen, in Betracht. Unter Copolymerisaten sollen hierbei sowohl statistische Copolymerisate als auch die sogenannten Block- oder Impactcopolymerisate verstanden werden.

In der Regel wird das erfindungsgemäße Verfahren in einer zwei- oder mehrstufigen Polymerisation eingesetzt, d.h. die Polymerisationsbedingungen unterscheiden sich in den Stufen soweit, daß Polymerisate mit unterschiedlichen Eigenschaften erzeugt werden. Für die Homopolymerisate oder statistischen Copolymerisate kann dies beispielsweise die Molmasse sein, d.h. zur Verbreiterung der Molmassenverteilung werden in den Stufen Polymerisate mit unterschiedlichen Molmassen hergestellt. Bevorzugt werden in den Stufen unterschiedliche Monomere bzw. Monomerzusammensetzungen polymerisiert. Dies führt dann üblicherweise zu den Block- oder Impactcopolymerisaten.

Besonders geeignet ist das erfindungsgemäße Verfahren zur Herstellung von Homopolymerisaten des Propylens oder von Copolymerisaten des Propylens mit bis zu 30 Gew.-% einpolymerisierter anderer Alk-1-ene mit bis zu 8 C-Atomen. Die Copolymerisate des Propylens sind hierbei statistische Copolymerisate oder Block- oder Impactcopolymerisate. Sofern die Copolymerisate des Propylens statistisch aufgebaut sind, enthalten sie im allgemeinen bis zu 15 Gew.-%, bevorzugt bis zu 6 Gew.-%, andere Alk-1-ene mit bis zu 8 C-Atomen, insbesondere Ethylen, But-1-en oder ein Gemisch aus Ethylen und But-1-en.

Die Block- oder Impactcopolymerisate des Propylens sind Polymerisate, bei denen man in der ersten Stufe ein Propylenhomopolymerisat oder ein statistischen Copolymerisat des Propylens mit bis zu 15 Gew.-%, bevorzugt bis zu 6 Gew.-%, anderer Alk-1-ene mit bis zu 8 C-Atomen herstellt und dann in der zweiten Stufe ein Propylen-Ethylen-Copolymerisat mit Ethylengehalten von 15 bis 80 Gew.-%, wobei das Propylen-Ethylen-Copolymerisat zusätzlich noch weitere C₄-C₈-Alk-1-ene enthalten kann, hinzupolymerisiert. In der Regel wird soviel des Propylen-Ethylen-Copolymerisats hinzupolymerisiert, daß das in der zweiten Stufe erzeugte Copolymerisat im Endprodukt von 3 bis 60 Gew-% ausmacht. Besonders bevorzugt ist das erfindungsgemäße Verfahren dann, wenn der Anteil des in der zweiten Stufe hergestellten Propylen-Ethylen-Copolymerisats im Bereich von 20 bis 60 Gew-% liegt.

Die Polymerisation erfolgt erfindungsgemäß mittels eines Ziegler-Natta-Katalysatorsystems. Dabei werden insbesondere solche Katalysatorsysteme verwendet, die neben einer titanhaltigen Feststoffkomponente a) noch Cokatalysatoren in Form von organischen Aluminiumverbindungen b) und Elektronendonorverbindungen c) aufweisen.

Im erfindungsgemäßen Verfahren können aber auch Ziegler-Natta-Katalysatorsysteme auf der Basis von Metallocenverbindungen eingesetzt werden.

Zur Herstellung der titanhaltigen Feststoffkomponente a) werden als Titanverbindungen im allgemeinen die Halogenide oder Alkoholate des drei- oder vierwertigen Titans verwendet, wobei auch Titanalkoxyhalogenverbindungen oder Mischungen verschiedener Titanverbindungen in Betracht kommen. Bevorzugt werden die Titanverbindungen eingesetzt, die als Halogen Chlor enthalten. Ebenfalls bevorzugt sind die Titanhalogenide, die neben Titan nur Halogen enthalten, und hierbei vor allem die Titanchloride und insbesondere Titantetrachlorid.

Die titanhaltige Feststoffkomponente a) enthält vorzugsweise mindestens eine halogenhaltige Magnesiumverbindung. Als Halogene werden hierbei Chlor, Brom, Jod oder Fluor verstanden, wobei Brom oder insbesondere Chlor bevorzugt sind. Die halogenhaltigen Magnesiumverbindungen werden entweder bei der Herstellung der titanhaltige Feststoffkomponente a) direkt eingesetzt oder bei deren Herstellung gebildet. Als Magnesiumverbindungen, die sich zur Herstellung der titanhaltige Feststoffkomponente a) eignen, kommen vor allem die Magnesiumhalogenide, wie insbesondere Magnesiumdichlorid oder Magnesiumdibromid, oder Magnesiumverbindungen, aus denen die Halogenide in üblicher Weise z.B. durch Umsetzung mit Halogenierungsmitteln erhalten werden können wie Magnesiumalkyle, Magnesiumaryle, Magnesiumalkoxy- oder Magnesiumaryloxyverbindungen oder Grignardverbindungen in Betracht. Bevorzugte Beispiele für halogenfreie Verbindungen des Magnesiums, die zur Herstellung der titanhaltige Feststoffkomponente a) geeignet sind, sind n-Butylethylmagnesium oder n-Butyloctylmagnesium. Bevorzugte Halogenierungsmittel sind Chlor oder Chlorwasserstoff. Es können jedoch auch die Titanhalogenide als Halogenierungsmittel dienen.

Darüber hinaus enthält die titanhaltige Feststoffkomponente a) zweckmäßigerweise Elektronendonorverbindungen, beispielsweise mono- oder polyfunktionelle Carbonsäuren, Carbonsäureanhydride oder Carbonsäureester, ferner Ketone, Ether, Alkohole, Lactone oder phosphor- oder siliciumorganische Verbindungen.

Bevorzugt werden als Elektronendonorverbindungen innerhalb der titanhaltigen Feststoffkomponente Carbonsäurederivate und insbesondere Phthalsäurederivate der allgemeinen Formel (II) 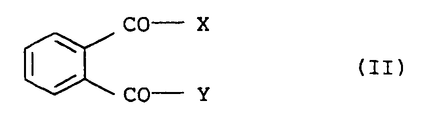 verwendet, wobei X und Y jeweils für ein Chlor- oder Bromatom oder einen C₁-C₁₀-Alkoxyrest oder gemeinsam für Sauerstoff in Anhydridfunktion stehen. Besonders bevorzugte Elektronendonorverbindungen sind Phthalsäureester, wobei X und Y einen C₁-C₈-Alkoxyrest bedeuten. Beispiele für vorzugsweise eingesetzte Phthalsäureester sind Diethylphthalat, Di-n-butylphthalat, Di-iso-butylphthalat, Di-n-pentylphthalat, Di-n-hexylphthalat, Di-n-heptylphthalat, Di-n-octylphthalat oder Di-2-ethylhexylphthalat.

Weiter bevorzugte Elektronendonorverbindungen innerhalb der titanhaltigen Feststoffkomponente sind Diester von 3- oder 4-gliedrigen, gegebenenfalls substituierten Cycloalkyl-1,2-dicarbonsäuren, sowie Monoester von substituierten Benzophenon-2-carbonsäuren oder substituierten Benzophenon-2-carbonsäuren. Als Hydroxyverbindungen werden bei diesen Estern die bei Veresterungsreaktionen üblichen Alkanole verwendet, beispielsweise C₁-C₁₅-Alkanole oder C₅-C₇-Cycloalkanole, die ihrerseits eine oder mehrere C₁-C₁₀-Alkylgruppen tragen können, ferner C₆-C₁₀-Phenole.

Es können auch Mischungen verschiedener Elektronendonorverbindungen verwendet werden.

Bei der Herstellung der titanhaltigen Feststoffkomponente a) werden in der Regel pro Mol der Magnesiumverbindung von 0,05 bis 2,0 mol, bevorzugt von 0,2 bis 1,0 mol, der Elektronendonorverbindungen eingesetzt.

Darüber hinaus kann die titanhaltige Feststoffkomponente a) anorganische Oxide als Träger enthalten. Es wird in der Regel ein feinteiliges anorganisches Oxid als Träger verwendet, welches einen mittleren Teilchendurchmesser von 5 bis 200 µm, bevorzugt von 20 bis 70 µm, aufweist. Unter dem mittleren Teilchendurchmesser ist hierbei der volumenbezogene Mittelwert (Medianwert) der durch Coulter-Counter-Analyse bestimmten Korngrößenverteilung zu verstehen.

Vorzugsweise sind die Körner des feinteiligen anorganischen Oxids aus Primärpartikeln zusammengesetzt, die einen mittleren Teilchendurchmesser der Primärpartikel von 1 bis 20 µm, insbesondere von 1 bis 5 µm aufweisen. Bei den sogenannten Primärpartikeln handelt es sich um poröse, granuläre Oxidpartikel, welche im allgemeinen durch Mahlung aus einem Hydrogel des anorganischen Oxids erhalten werden. Es ist auch möglich die Primärpartikeln vor ihrer Weiterverarbeitung zu sieben.

Weiterhin ist das bevorzugt zu verwendende anorganische Oxid auch dadurch charakterisiert, daß es Hohlräume bzw. Kanäle mit einem mittleren Durchmesser von 0,1 bis 20 um, insbesondere von 1 bis 15 µm, aufweist, deren makroskopischer Volumenanteil am Gesamtpartikel im Bereich von 5 bis 30 %, insbesondere im Bereich von 10 bis 30 %, liegt.

Die Bestimmung der mittleren Teilchendurchmesser der Primärpartikel sowie des makroskopischen Volumenanteils der Hohlräume und Kanäle des anorganischen Oxids erfolgt zweckmäßigerweise durch Bildanalyse mit Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des anorganischen Oxids. Die erhaltenen Aufnahmen werden ausgewertet und daraus die mittleren Teilchendurchmesser der Primärpartikel sowie der makroskopische Volumenanteil der Hohlräume und Kanäle bestimmt. Die Bildanalyse erfolgt vorzugsweise durch Überführung des elektronenmikroskopischen Datenmaterials in ein Grauwert-Binärbild und die digitale Auswertung mittels einer geeigneten EDV-Programms, z.B. des Software-Pakets Analysis der Fa. SIS.

Das bevorzugt zu verwendende anorganische Oxid kann beispielsweise durch Sprühtrockenen des vermahlenen Hydrogels, welches hierzu mit Wasser oder einem aliphatischen Alkohol vermischt wird, erhalten werden. Solche feinteiligen anorganischen Oxide sind auch im Handel erhältlich.

Das feinteilige anorganische Oxid weist ferner üblicherweise ein Porenvolumen von 0,1 bis 10 cm³/g, bevorzugt von 1,0 bis 4,0 cm³/g, und eine spezifische Oberfläche von 10 bis 1000 m²/g, bevorzugt von 100 bis 500 m²/g, auf, wobei hier die durch Quecksilber-Porosimetrie nach DIN 66133 und durch Stickstoff-Adsorption nach DIN 66131 bestimmten Werte zu verstehen sind.

Es ist auch möglich ein anorganisches Oxid einzusetzen, dessen pH-Wert, d.h. der negative dekadische Logarithmus der Protonenkonzentration, im Bereich von 1 bis 6,5 und insbesondere im Bereich von 2 bis 6, liegt.

Als anorganische Oxide kommen vor allem die Oxide des Siliciums, des Aluminiums, des Titans oder eines der Metalle der I. bzw. der II. Hauptgruppe des Periodensystems in Betracht. Als besonders bevorzugtes Oxid wird neben Aluminiumoxid oder Magnesiumoxid oder einem Schichtsilikat vor allem Siliciumoxid (Kieselgel) verwendet. Es können auch Mischoxide wie Aluminiumsilikate oder Magnesiumsilikate eingesetzt werden.

Die als Träger eingesetzten anorganischen Oxide enthalten auf ihrer Oberfläche Wasser. Dieses Wasser ist zum Teil physikalisch durch Adsorption und zum Teil chemisch in Form von Hydroxylgruppen gebunden. Durch thermische oder chemische Behandlung kann der Wassergehalt des anorganischen Oxids reduziert oder ganz beseitigt werden, wobei in der Regel bei einer chemischen Behandlung übliche Trocknungsmittel wie SiCl₄, Chlorsilane oder Aluminiumalkyle zum Einsatz kommen. Der Wassergehalt geeigneter anorganischer Oxide beträgt von 0 bis 6 Gew.-%. Vorzugsweise wird ein anorganische Oxid in der Form, wie es im Handel erhältlich ist, ohne weitere Behandlung eingesetzt.

Die Magnesiumverbindung und das anorganische Oxid liegen innerhalb der titanhaltigen Feststoffkomponente a) bevorzugt in solchen Mengen vor, daß pro Mol des anorganischen Oxids von 0,1 bis 1,0 mol, insbesondere von 0,2 bis 0,5 mol der Verbindung des Magnesiums vorhanden sind.

Bei der Herstellung der titanhaltigen Feststoffkomponente a) kommen in der Regel ferner C₁- bis C₈-Alkanole wie Methanol, Ethanol, n-Propanol, Isopropanol, n-Butanol, sek.-Butanol, tert.-Butanol, Isobutanol, n-Hexanol, n-Heptanol, n-Oktanol oder 2-Ethylhexanol oder deren Mischungen zum Einsatz. Bevorzugt wird Ethanol verwendet.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 4 857 613 und der US-A 288 824 beschrieben. Bevorzugt wird das aus der DE-A 195 29 240 bekannte Verfahren angewandt.

Geeignete Aluminiumverbindungen b) sind außer Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man in der Regel als weiteren Cokatalysator Elektronendonorverbindungen c) wie mono- oder polyfunktionelle Carbonsäuren, Carbonsäureanhydride oder Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können. Bevorzugte Elektronendonorverbindungen sind dabei siliciumorganische Verbindunggen der allgemeinen Formel (I)

R¹ ₙSi(OR²)₄₋ₙ (I)

wobei R¹ gleich oder verschieden ist und eine C₁-C₂₀-Alkylgruppe, eine 5- bis 7-gliedrige Cycloalkylgruppe, die ihrerseits durch C₁-C₁₀-Alkyl substituiert sein kann, eine C₆-C₁₈-Arylgruppe oder eine C₆-C₁₈-Aryl-C₁-C₁₀-alkylgruppe bedeutet, R² gleich oder verschieden ist und eine C₁-C₂₀-Alkylgruppe bezeichnet und n für die ganzen Zahlen 1, 2 oder 3 steht. Besonders bevorzugt werden solche Verbindungen, in denen R¹ eine C₁-C₈-Alkylgruppe oder eine 5- bis 7-gliedrige Cycloalkylgruppe sowie R² eine C₁-C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisopropyl-tert.-butylsilan, Dimethoxyisobutyl-sek.-butylsilan und Dimethoxyisopropyl-sek.-butylsilan hervorzuheben.

Bevorzugt werden die Cokatalysatoren b) und c) in einer solchen Menge eingesetzt, daß das Atomverhältnis zwischen Aluminium aus der Aluminiumverbindung b) und Titan aus der titanhaltigen Feststoffkomponente a) von 10:1 bis 800:1, insbesondere von 20:1 bis 200:1 beträgt und das Molverhältnis zwischen der Aluminiumverbindung b) und der Elektronendonorverbindung c) von 1:1 bis 250:1, insbesondere von 10:1 bis 80:1, beträgt.

Die titanhaltige Feststoffkomponente a), die Aluminiumverbindung b) und die in der Regel verwendete Elektronendonorverbindung c) bilden zusammen das Ziegler-Natta-Katalysatorsystem. Die Katalysatorbestandteile b) und c) können zusammen mit der titanhaltigen Feststoffkomponente a) oder als Gemisch oder auch in beliebiger Reihenfolge einzeln in denn Polymerisationsreaktor eingebracht werden.

Im erfindungsgemäßen Verfahren können auch Ziegler-Natta-Katalysatorsysteme auf Basis von Metallocenverbindungen verwendet werden.

Unter Metallocenen sollen hier Komplexverbindungen aus Metallen von Nebengruppen des Periodensystems mit organischen Liganden verstanden werden, die zusammen mit metalloceniumionenbildenden Verbindungen wirksame Katalysatorsysteme ergeben. Für einen Einsatz im erfindungsgemäßen Verfahren liegen die Metallocenkomplexe im Katalysatorsystem in der Regel geträgert vor. Als Träger werden häufig anorganische Oxide eingesetzt. Bevorzugt sind die oben beschriebenen anorganischen Oxide, die auch zur Herstellung der titanhaltigen Feststoffkomponente a) verwendet werden.

Üblicherweise eingesetzte Metallocene enthalten als Zentralatome Titan, Zirkonium oder Hafnium, wobei Zirkonium bevorzugt ist. Im allgemeinen ist das Zentralatom über eine n-Bindung an mindestens eine, in der Regel substituierte, Cyclopentadienylgruppe sowie an weitere Substituenten gebunden. Die weiteren Substituenten können Halogene, Wasserstoff oder organische Reste sein, wobei Fluor, Chlor, Brom, oder Jod oder eine C₁-C₁₀-Alkylgruppe bevorzugt sind.

Bevorzugte Metallocene enthalten Zentralatome, die über zwei n-Bindungen an zwei substituierte Cyclopentadienylgruppen gebunden sind, wobei diejenigen besonders bevorzugt sind, in denen Substituenten der Cyclopentadienylgruppen an beide Cyclopentadienylgruppen gebunden sind. Insbesondere sind Komplexe bevorzugt, deren Cyclopentadienylgruppen zusätzlich durch cyclische Gruppen an zwei benachbarten C-Atomen substituiert sind.

Bevorzugte Metallocene sind auch solche, die nur eine Cyclopentadienylgruppe enthalten, die jedoch mit einen Rest substituiert ist, der auch an das Zentralatom gebunden ist.

Geeignete Metallocenverbindungen sind beispielsweise
Ethylenbis(indenyl)-zirkoniumdichlorid,
Ethylenbis(tetrahydroindenyl)-zirkoniumdichlorid,
Diphenylmethylen-9-fluorenylcyclopentadienylzirkoniumdichlorid,
Dimethylsilandiylbis(3-tert.butyl-5-methylcyclopentadienyl)-zirkoniumdichlorid,
Dimethylsilandiylbis(2-methylindenyl)-zirkoniumdichlorid,
Dimethylsilandiylbis(2-methylbenzindenyl)-zirkoniumdichlorid,
Dimethylsilandiylbis(2-methyl-4-phenylindenyl)zirkoniumdichlorid,
Dimethylsilandiylbis(2-methyl-4-naphthylindenyl)zirkoniumdichlorid,
Dimethylsilandiylbis(2-methyl-4-isopropylindenyl)zirkoniumdichlorid oder
Dimethylsilandiylbis(2-methyl-4,6-diisopropylindenyl)zirkoniumdichlorid sowie die entsprechenden Dimethylzirkoniumverbindungen.

Die Metallocenverbindungen sind entweder bekannt oder nach an sich bekannten Methoden erhältlich.

Weiterhin enthalten die Metallocen-Katalysatorsysteme metalloceniumionenbildende Verbindungen. Geeignet sind starke, neutrale Lewissäuren, ionische Verbindungen mit lewissauren Kationen oder ionische Verbindungen mit Brönsted-Säuren als Kation. Beispiele sind hierfür Tris(pentafluorphenyl)boran, Tetrakis(pentafluorophenyl)borat oder Salze des N,N-Dimethylaniliniums. Ebenfalls geeignet als metalloceniumionenbildende Verbindungen sind offenkettige oder cyclische Alumoxanverbindungen. Diese werden üblicherweise durch Umsetzung von Trialkylaluminium mit Wasser hergestellt und liegen in der Regel als Gemische unterschiedlich langer, sowohl linearer als auch cyclischer Kettenmoleküle vor.

Darüber hinaus können die Metallocen-Katalysatorsysteme metallorganische Verbindungen der Metalle der I., II. oder III. Hauptgruppe des Periodensystems enthalten wie n-Butyl-Lithium, n-Butyl-n-octyl-Magnesium oder Tri-iso-butyl-aluminium, Triethylaluminium oder Trimethylaluminium.

Das erfindungsgemäße Verfahren wird durch Polymerisation in einer Reaktorkaskade aus aus wenigstens zwei hintereinander geschalteten Reaktoren durchgeführt. Es können die üblichen, für die Polymerisation von C₂-C₈-Alk-1-enen verwendeten Reaktoren eingesetzt werden, wobei die Polymerisation sowohl in der Gasphase, in Lösung, in flüssigen Monomeren oder auch in einer Aufschlämmung durchgeführt werden kann. Geeignete Reaktoren sind u.a. kontinuierlich betriebene Rührkessel, Schleifenreaktoren oder Wirbelbettreaktoren. Die Größe der Reaktoren ist für das erfindungsgemäße Verfahren nicht von wesentlicher Bedeutung. Sie richtet sich nach dem Ausstoß, der mit der Reaktorkaskade erzielt werden soll.

Besonders vorteilhaft wirkt sich das erfindungsgemäße Verfahren aus, wenn die Polymerisation im Reaktor R_{B}, in den das Reaktionsgemisch mit dem hinzugefügten Regulator eingetragen wird, in Gasphase erfolgt. Hierbei kann die Polymerisation in R_{A} sowie den Reaktoren, die R_{A} vorgeschaltet sein können, sowohl in Flüssigphase als auch in Gasphase erfolgen. In einer bevorzugten Ausführungsform erfolgt die Polymerisation in allen Reaktoren in der Gasphase. Geeignete Gasphasenreaktoren sind hierbei Wirbelbettreaktoren sowie horizontal oder vertikal gerührte Pulverbettreaktoren. Das Reaktionsbett besteht im erfindungsgemäßen Verfahren im allgemeinen aus dem Polymerisat aus C₂-C₈-Alk-1-enen, das im jeweiligen Reaktor polymerisiert wird.

In einer besonders bevorzugten Ausführungsform wird das erfindungsgemäße Verfahren in einer Kaskade aus Gasphasenreaktoren durchgeführt, in denen das pulverförmige Reaktionsbett durch einen vertikalen Rührer in Bewegung gehalten wird, wobei sich sogenannte frei tragende Wendelrührer besonders gut eignen. Derartige Rührer sind u.a. aus der EP-B 000 512 und der EP-B 031 417 bekannt. Sie zeichnen sich insbesondere dadurch aus, daß sie das pulverförmige Reaktionsbett sehr homogen verteilen. Beispiele für solche pulverförmigen Reaktionsbette sind in der EP-B 038 478 beschrieben. Vorzugsweise besteht die Reaktorkaskade aus zwei hintereinander geschalteten, kesselförmigen, mit einem Rührer versehenen Reaktoren mit einem Rauminhalt von 0,1 bis 100 m³, beispielsweise 12,5, 25, 50 oder 75 m³.

Vorteilhaft ist die Stelle, an der der Regulator dem Reaktionsgemisch hinzugefügt wird, möglichst nahe an R_{A} zu wählen. Das überführte Polymerisat und der Regulator stehen dann möglichst lange während der Übertragung miteinander in Kontakt. Dies wird dadurch gewährleistet, daß der Regulator in der ersten Hälfte, bevorzugt im ersten Drittel, der Übertragseinrichtung hinzugefügt wird. Allerdings ist sicherzustellen, daß der flüssige oder sich in Lösung befindende Regulator nicht so zugegeben wird, daß er in R_{A} zurücklaufen kann. Vorzugsweise wird der Regulator kontinuierlich in die Übertragseinrichtung dosiert. Dies gilt auch dann, wenn das in R_{A} erhaltene Polymerisat diskontinuierlich zusammen mit nicht umgesetzten Monomeren und und noch aktiven Ziegler-Natta-Katalysatorbestandteilen nach R_{B} übertragen wird. Die Zugabe des Regulators kann mit üblichen Dosiervorrichtungen, beispielsweise einer Pumpe oder einem Druckgefäß, erfolgen.

Eine besonders bevorzugte Ausführungsform ist in der nachfolgenden Figur schematisch dargestellt. Diese besteht aus zwei hintereinandergeschalteten Reaktoren R_{A} (1) und R_{B} (2), die jeweils mit einem frei tragenden Wendelrührer (3) und (4) versehen sind.

Beide Reaktoren sind mit mindestens einem Rohr als Übertragseinrichtung (5) miteinander verbunden, durch welches das in R_{A} (1) gebildete Polymerisat ausgetragen und in R_{B} (2) übergeführt werden kann und in dem erfindungsgemäß der Regulator dem Reaktionsgemisch hinzugefügt wird. Dabei werden die in der Polymerisationstechnik üblichen Rohre verwendet, die in der Regel aus Edelstahl bestehen. Vorteilhaft wird der Regulator möglichst am Anfang des Rohres (5), insbesondere in der ersten Hälfte des Rohres, zugegeben.

Nicht verbrauchte, gasförmige Monomere werden jeweils aus dem Kopf des Reaktors, d.h. am oberen Reaktorende zunächst über ein weiteres Rohr (6) bzw. (7) abgezogen und anschließend jeweils über ein Kreisgasfilter (8) bzw. (9) von mitgerissenen Polymerisatteilchen abgetrennt. Danach werden die Monomere aus R_{A} (1) mit Hilfe eines Kondensators (10) verflüssigt und über eine Pumpe (12) wieder in R_{A} (1) als Flüssigkeiten bzw. als Zweiphasengemisch zusammen mit frischen Monomeren eingebracht, wo sie unter den gegebenen Bedingungen rasch verdampfen. Die Monomere aus R_{B} (2) werden mit Hilfe eines zwischen dem Kreisgasfilter (9) und dem Kondensator (11) eingebauten Kompressors (14) verdichtet und danach entweder durch Kondensatoren (11) und (13) verflüssigt und auf tiefere Temperaturen abgekühlt oder bei höherer Verdichtung wieder auf Reaktionsdruck entspannt, wobei durch den Joule-Thompson-Effekt eine entsprechende Abkühlung erfolgt. Durch diese Kreisgasführung verbunden mit der Verdampfungskühlung durch die flüssig eingebrachten Monomere gelingt es, die bei der Polymerisation entstehende Reaktionswärme rasch abzuführen und für eine gute Durchmischung des pulverförmigen Reaktionsbettes mit Monomeren zu sorgen.

Unter der ebenfalls Vorrichtung ist eine Kaskade aus mindesten zwei Reaktoren zu verstehen, die jeweils mit mindestens einer Übertragseinrichtung, durch die das Reaktionsgemisch aus Polymerisat, nicht umgesetzten Monomeren und noch aktiven Ziegler-Natta-Katalysatorbestandteilen aus einem Reaktor ausgetragen und in den darauffolgenden Reaktor überführt wird, miteinander verbunden sind, wobei sich an einer Übertragseinrichtung, d.h. beispielsweise einem Rohr, durch die das Polymerisat aus einem Reaktor ausgetragen und in einen nächsten überführt wird, eine Dosiervorrichtung zur Zugabe eines flüssigen oder in Lösung vorliegenden Regulators befindet. Vorteilhaft ist die Dosiervorrichtung oder sind die Dosiervorrichtungen möglichst am Anfang der Übertragungseinrichtung, d.h. in der ersten Hälfte und insbesondere im ersten Drittel der Übertragungseinrichtung, angeordnet.

Im erfindungsgemäßen Verfahren wird die Polymerisation zur Regelung der Katalysatoraktivität in Gegenwart eines flüssigen oder sich in Lösung befindenden Regulators durchführt. Als Regulatoren kommen vor allem Verbindungen in Betracht, die aktiven Wasserstoff enthalten, wie Wasser, Phenole, Carbonsäuren, Sulfonsäuren, primäre oder sekundäre Amine Methanol, Ethanol, n-Propanol, Isopropanol, n-3utanol, tert-Butanol, n-Hexanol, n-Oktanol, Cyclohexanol, Benzylakohol oder Glycerin; Phenole wie z.B. Phenol, Kresol, Xylenol oder andere alkylsubstituierte Phenole; aliphatische, alicyclische oder aromatische Carbonsäuren wie z.B. Ameisensäure, Essigsäure, Propionsäure, Buttersäure, Acrylsäure, Benzoesäure oder Stearinsäure; Sulfonsäuren wie z.B. Methansulfonsäure, Ethansulfonsäure, Benzolsulfonsäure oder Toluolsulfonsäure; primäre Amine wie z.B. Ethylamin, Isopropylamin, Cyclohexylamin oder Anilin sowie sekundäre Amine wie z.B. Dimethylamin, Di-n-butylamin, Dibenzylamin oder Piperidin. Besonders bevorzugt ist Isopropanol. Es ist auch möglich eine Mischung aus zwei oder mehreren Regulatoren einzusetzen.

Die erfindungsgemäß in die Übertragseinrichtung dosierten Regulatoren haben die Aufgabe, die Aktivität des Katalysatorsystems in R_{B} sowie den Reaktoren, die sich an R_{B} anschließen können, so zu regeln, daß das Verhältnis der in der in den Reaktoren gebildeten Polymerisate genau eingestellt werden kann. Dies wird im allgemeinen über eine Dämpfung der Polymerisationsaktivität in R_{B} erreicht. Darüber hinaus haben die Regulatoren den Zweck, die Bildung von Brocken oder Agglomeraten der Polymerpartikel sowie die Bildung von Belägen und Anwachsungen an den Reaktorwänden und -einbauten zu verringern. Diesen Zweck können sie bei einer Verwendung entsprechend dem erfindungsgemäßen Verfahren in besonderem Maße erfüllen.

Im erfindungsgemäßen Verfahren wird die Polymerisation unter üblichem Reaktionsbedingungen bei Temperaturen von 40 bis 120°C und Drücken von 1 bis 100 bar vorgenommen. Bevorzugt sind Temperaturen von 40 bis 100°C und Drücke von 10 bis 50 bar. Die Molmasse der gebildeten Polymerisate der C₂-C₈-Alk-1-ene kann durch die Zugabe von in der Polymerisationstechnik üblichen Reglern, beispielsweise von Wasserstoff, kontrolliert und eingestellt werden. Die Polymerisate der C₂-C₈-Alk-1-ene weisen in der Regel eine Schmelze-Fließrate (MFR) von 0,1 bis 100 g/10 min., bei 230°C und unter einem Gewicht von 2,16 kg, auf. Die Schmelze-Fließrate entspricht dabei der Menge an Polymerisat, die innerhalb von 10 Minuten aus der nach ISO 1133 genormten Prüfvorrichtung bei einer Temperatur von 230°C und unter einem Gewicht von 2,16 kg ausgepreßt wird. Besonders bevorzugt sind dabei solche Polymerisate, deren Schmelze-Fließrate 0,1 bis 20 g/10 min, bei 230°C und unter einem Gewicht von 2,16 kg, beträgt.

Bei der Herstellung von Propylen-Blockcopolymerisaten wird üblicherweise in der ersten Stufe bei einem Druck von 15 bis 40 bar und bei einer Temperatur von 50 bis 120°C Propylen homopolymerisiert oder mit bis zu 15 Gew.-% anderer Alk-1-ene mit bis zu 8 C-Atomen copolymerisiert und dann in der zweiten Stufe bei einem Druck von 5 bis 30 bar und bei einer Temperatur von 30 bis 100°C ein Gemisch aus Propylen und Ethylen, das zusätzlich noch anderen C₄-C₈-Alk-1-ene enthalten kann, so copolymerisiert, daß das gebildete Copolymerisat einen Ethylengehalten zwischen 15 und 80 Gew.-% aufweist. Es ist auch möglich, daß sich noch eine dritte Polymerisationsstufe anschließt, in der beispielsweise ein Ethylencopolymerisat gebildet wird. Für jede Polymerisationsstufe können ein, zwei oder auch mehrere Reaktoren eingesetzt werden. Vorzugsweise wird der Regulator zwischen der ersten Stufe und der zweiten Stufe zugegeben, d.h. R_{A} ist der letzte Reaktor der ersten Stufe und R_{B} ist der erste Reaktor der zweiten Stufe. Bei Kaskaden, die aus mehr als zwei Reaktoren bestehen, ist es auch möglich, mehrmals Regulator zuzugeben, d.h. die Kaskade enthält dann mehrere Reaktoren R_{A} und mehrere Reaktoren R_{B}.

Insbesondere wird die zweistufige Polymerisation nur in zwei Reaktoren R_{A} und R_{B} durchgeführt. In R_{A} sind dann Drücke von 17 bis 35 bar und Temperaturen von 65 bis 110°C, in R_{B} Drücke von 10 bis 25 bar und Temperaturen von 40 bis 80°C bevorzugt. Als Molmassenregler kann in beiden Reaktoren Wasserstoff verwendet werden. Der Druck in R_{A} sollte vorteilhaft mindestens 10 bar, insbesondere mindestens 7 bar höher sein als der Druck in R_{B}.

Die mittleren Verweilzeiten liegen im allgemeinen im ersten Reaktor bei 0,5 bis 5 Stunden, im zweiten Reaktor betragen sie 0,25 bis 4 Stunden. Bevorzugte erfindungsgemäße Verfahren weisen im ersten Reaktor mittlere Verweilzeiten von 0,6 bis 4 Stunden und insbesondere von 0,7 bis 3 Stunden und im zweiten Reaktor von 0,3 bis 3,5 Stunden und insbesondere von 0,35 bis 2,5 Stunden auf.

Mit Hilfe des erfindungsgemäßen Verfahrens können C₂-C₈-Alk-1-ene in Anwesenheit eines Ziegler-Natta-Katalysatorsystems mit eine deutlich verringerten Neigung zur Bildung von Brocken oder Agglomeraten der Polymerpartikel sowie von Belägen und Anwachsungen an den Reaktorwänden und -einbauten polymerisiert werden. Dadurch kann die Anlagenlaufzeit verlängert werden und die Zahl der Reinigungsschritte vermindert sich, wodurch das Verfahren insgesamt wirtschaftlicher wird.

Mittels des erfindungsgemäßen Verfahrens können verschiedene Arten von Polymerisaten von C₂-C₈-Alk-1-enen hergestellt werden, beispielsweise Homopolymerisate, Copolymerisate oder Gemische aus derartigen Polymerisaten. Diese eigenen sich vor allem zur Herstellung von Folien, Fasern oder Formkörpern.

### Beispiele

Die Herstellung der Polypropylenpolymerisate erfolgte in einer zweistufigen Polymerisation in einer Kaskade aus zwei hintereinander geschalteten vertikal gerührten Gasphasenreaktoren R_{A} und R_{B} mit jeweils einem Rauminhalt von 12,5 m³. Beide Reaktoren enthielten ein bewegtes Festbett aus feinteiligem Polymerisat. Vor jedem Versuch wurde die Reaktoren geöffnet, die Reaktorwände und -einbauten von Belägen gereinigt und die Reaktoren anschließend mit einem brocken- und agglomeratfreien Pulverbett gefüllt.

Bei allen Versuchen wurde ein Katalysatorsystem eingesetzt, das eine nach folgendem Verfahren hergestellte titanhaltige Feststoffkomponente a₁) enthielt:

In einer ersten Stufe wurde ein feinteiliges Kieselgel, das einen mittleren Teilchendurchmesser von 30 µm, ein Porenvolumen von 1,5 cm³/g und eine spezifische Oberfläche von 260 m²/g aufwies, mit einer Lösung von n-Butyloctylmagnesium in n-Heptan versetzt, wobei pro Mol SiO₂ 0,3 mol der Magnesiumverbindung eingesetzt wurden. Das feinteilige Kieselgel war zusätzlich durch eine mittlere Teilchengröße der Primärpartikel von 3-5 µm und durch Hohlräume und Kanäle mit einem Durchmesser von 3-5 um charakterisiert, wobei der makroskopische Volumenanteil der Hohlräume und Kanäle am Gesamtpartikel bei etwa 15 % lag. Die Lösung wurde 45 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 mol Ethanol pro Mol Magnesium versetzt. Dieses Gemisch wurde 0,5 Stunden bei 80°C gerührt und anschließend mit 7,2 mol Titantetrachlorid und 0,5 mol Di-n-butylphthalat, jeweils bezogen auf 1 mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente a₁) enthielt

| | |
|---|---|
| 3,5 | Gew.-% Ti |
| 7,4 | Gew.-% Mg |
| 28,2 | Gew.-% Cl. |

### Vergleichsbeispiel A

In der ersten Polymerisationsstufe wurde im Reaktor R_{A} bei einem Druck von 30 bar, einer Temperatur von 80°C und einer mittleren Verweilzeit von 2,2 h Propylen in Anwesenheit von Wasserstoff als Molmassenregler polymerisiert. Dabei wurde als Katalysatorsystem der titanhaltige Katalysatorfeststoff a₁) zusammen mit den Cokatalysatoren Triethylaluminium und Dimethoxyisobutylisopropylsilan eingesetzt. Pro Tonne dem Reaktor zugeführtes Propylen wurden 0,3 kg Triethylaluminium und 56 g Dimethoxyisobutylisopropylsilan verwendet. Es wurde ein Propylenhomopolymerisat mit einer Schmelze-Fließrate (MFR) von 12,1 g/10 min (bei 230°C und 2,16 kg nach ISO 1133) erhalten.

Das in R_{A} gebildete Polymerisat wurde diskontinuierlich aus R_{A} ausgetragen und zusammen mit nicht umgesetzten Monomeren und noch aktiven Ziegler-Natta-Katalysatorbestandteilen in R_{B} überführt.

In der zweiten Polymerisationsstufe wurde bei einem Druck von 20 bar und einer Temperatur von 70°C dem in R_{A} gebildeten Propylenhomopolymerisat ein Gemisch aus Propylen und Ethylen hinzupolymerisiert, wobei das Verhältnis der Partialdrücke zwischen Propylen und Ethylen bei 1,8 lag und das Gewichtsverhältnis zwischen dem im ersten Reaktor erhaltenen Propylenhomopolymerisat und dem im zweiten Reaktor entstandenen Propylen-Ethylen-Copolymerisat 1,7 betrug.

Zur Regelung des in der zweiten Polymerisationsstufe erzeugten Polymerisats wurde eine 17 gew.-%ige Lösung von Isopropanol in Heptan kontinuierlich direkt in R_{B} dosiert. Es wurden pro Mol der Aluminiumkomponente 2,0 mol Isopropanol verwendet.

Das erhaltene Propylen-Ethylen-Blockcopolymerisat wies eine Schmelze-Fließrate (MFR) von 2,1 g/10 min (bei 230°C und 2,16 kg nach ISO 1133) auf.

Nach 3 Wochen Laufzeit wurde R_{B} geöffnet. Es wurde der Anteil an gebildeten Brocken und Agglomerate im Pulverbett (Partikel mit einem Durchmesser größer 25 mm) bestimmt, sowie die Menge der an den Reaktoreinbauten und der Reaktorwänden angewachsenen Beläge nach mechanischer Entfernung gewogen.

### Beispiel 1

Vergleichsbeispiel A wurde analog wiederholt, jedoch wurde unter ansonsten identischen Bedingungen die 17 gew.-%ige Lösung von Isopropanol in Heptan kontinuierlich in die R_{A} und R_{B} verbindende Übertragsleitung dosiert. Die Zugabe erfolgte unmittelbar nach dem Austrag aus R_{A} nach etwa 30 % der Gesamtlänge der Übertragsleitung.

Nach 3 Wochen Laufzeit wurde R_{B} geöffnet. Es wurde der Anteil an gebildeten Brocken und Agglomerate im Pulverbett bestimmt, sowie die Menge der an den Reaktoreinbauten und den Reaktorwänden angewachsenen Beläge nach mechanischer Entfernung gewogen.

Der Anteil an Brocken und Agglomeraten im Pulverbett von R_{B} war auf 45 % des Anteils des Vergleichsbeispiels A reduziert. Und die Menge an Belägen und Anwachsungen betrug nur 35 % der des Vergleichsbeispiels A.

### Vergleichsbeispiel B

In R_{A} wurde bei einem Druck von 28 bar, einer Temperatur von 70°C und einer mittleren Verweilzeit von 2,4 h ein Gemisch aus Propylen und Ethylen in Anwesenheit von Wasserstoff als Molmassenregler polymerisiert, wobei das Verhältnis der Partialdrücke zwischen Propylen und Ethylen 97 : 1 betrug. Dabei wurde als Katalysatorsystem der titanhaltige Katalysatorfeststoff a₁) zusammen mit den Cokatalysatoren Triethylaluminium und Dimethoxyisobutylisopropylsilan eingesetzt. Pro Tonne dem Reaktor zugeführtes Propylen wurden 0,3 kg Triethylaluminium und 61 g Dimethoxyisobutylisopropylsilan verwendet. Es wurde ein Propylen-Ethylen-Copolymerisate mit einer Schmelze-Fließrate (MFR) von 5,5 g/10 min (bei 230°C und 2,16 kg nach ISO 1133) erhalten.

Das in R_{A} gebildete Polymerisat wurde diskontinuierlich aus R_{A} ausgetragen und zusammen mit nicht umgesetzten Monomeren und noch aktiven Ziegler-Natta-Katalysatorbestandteilen in R_{B} überführt.

In der zweiten Polymerisationsstufe wurde bei einem Druck von 15 bar und einer Temperatur von 80°C dem in R_{A} gebildeten Copolymerisat ein Gemisch aus Propylen und Ethylen hinzupolymerisiert, wobei das Verhältnis der Partialdrücke zwischen Propylen und Ethylen bei 1,7 lag und das Gewichtsverhältnis zwischen dem in R_{A} erhaltenen Polymerisat und dem in R_{B} entstandenen Propylen-Ethylen-Copolymerisat 1,2 betrug.

Zur Regelung des in der zweiten Polymerisationsstufe erzeugten Polymerisats wurde eine 17 gew.-%ige Lösung von Isopropanol in Heptan kontinuierlich direkt in R_{B} dosiert. Es wurden pro Mol der Aluminiumkomponente 0,6 mol Isopropanol verwendet.

Das erhaltene Propylen-Ethylen-Blockcopolymerisat wies eine Schmelze-Fließrate (MFR) von 1,9 g/10 min (bei 230°C und 2,16 kg nach ISO 1133) auf.

Nach 3 Wochen Laufzeit wurde R_{B} geöffnet. Es wurde der Anteil an gebildeten Brocken und Agglomerate im Pulverbett bestimmt, sowie die Menge der an den Reaktoreinbauten und den Reaktorwänden angewachsenen Beläge nach mechanischer Entfernung gewogen.

### Beispiel 2

Vergleichsbeispiel B wurde analog wiederholt, jedoch wurde unter ansonsten identischen Bedingungen die 17 gew.-%ige Lösung von Isopropanol in Heptan kontinuierlich in die R_{A} und R_{B} verbindende Übertragsleitung dosiert. Die Zugabe erfolgte unmittelbar nach dem Austrag aus R_{A} nach etwa 30 % der Gesamtlänge der Übertragsleitung.

Nach 3 Wochen Laufzeit wurde R_{B} geöffnet. Es wurde der Anteil an gebildeten Brocken und Agglomerate im Pulverbett bestimmt, sowie die Menge der an den Reaktoreinbauten und den Reaktorwänden angewachsenen Beläge nach mechanischer Entfernung gewogen.

Der Anteil an Brocken und Agglomeraten im Pulverbett von R_{B} war auf 35 % des Anteils des Vergleichsbeispiels B reduziert. Und die Menge an Belägen und Anwachsungen betrug nur 25 % der des Vergleichsbeispiels B.

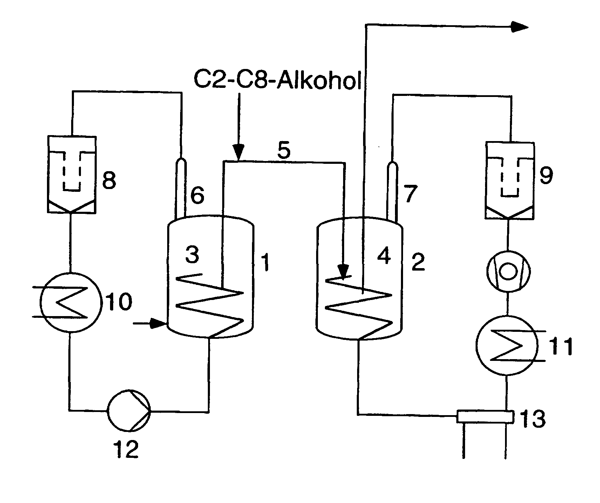

## Patentansprüche

1. Verfahren zur Polymerisation von C₂-C₈-Alk-1-enen mittels eines Ziegler-Natta-Katalysatorsystems in einer Reaktorkaskade aus mindestens zwei Reaktoren, wobei man in einem Reaktor R_{A}, dem ein oder mehrere weitere Reaktoren vorgeschaltet sein können, ein Homo- oder Copolymerisat von C₂-C₈-Alk-1-enen herstellt, das Reaktionsgemisch aus R_{A} austrägt und in einen nächsten Reaktor R_{B} überführt und die Polymerisation in R_{B} sowie den Reaktoren, die sich an R_{B} anschließen können, zur Regelung der Katalysatoraktivität in Gegenwart eines flüssigen oder sich in Lösung befindenden Regulators durchführt, **dadurch gekennzeichnet, daß** man den Regulator dem Reaktionsgemisch nach Austrag aus R_{A} und vor Eintrag in R_{B} hinzufügt und worin der Regulator aus Wasser, Phenole, Carbonsäuren, Sulfonsäuren, Primäre oder Sekundäre Amine, Methanol, Ethanol, n-Propanol, Isopropanol, n-Butanol, tert-Butanol, n-Hexanol, n-Oktanol, Cyclohexanol, Benzyalkohol und Glycerin ausgewählt ist.

2. Verfahren nach Anspruch 1 zur Herstellung von Homo- und/oder Copolymerisaten des Propylens.

3. Verfahren nach Anspruch 1 oder 2, wobei das Ziegler-Natta-Katalysatorsystem ein anorganisches Oxid als Träger enthält, welches einen mittleren Teilchendurchmesser von 5 bis 200 µm, einen mittleren Teilchendurchmesser der Primärpartikel von 1 bis 20 µm und Hohlräume bzw. Kanäle mit einem mittleren Durchmesser von 0,1 bis 20 µm aufweist, deren makroskopischer Volumenanteil am Gesamtpartikel im Bereich von 5 bis 30 % liegt.

4. Verfahren nach den Ansprüchen 1 bis 3, wobei die Polymerisation in R_{B} aus der Gasphase heraus stattfindet.

5. Verfahren nach den Ansprüchen 1 bis 4, wobei die Polymerisation in einer Kaskade aus Gasphasenreaktoren durchgeführt wird, die jeweils mit einem Bett aus feinteiligem Polymerisat gefüllt sind und durch einen Rührer in Bewegung gehalten werden.

6. Verfahren nach den Ansprüchen 1 bis 5, **dadurch gekennzeichnet, daß** man den Regulator dem Reaktionsgemisch in der ersten Hälfte der die Reaktoren R_{A} und R_{B} verbindenden Übertragseinrichtung hinzufügt.

7. Verfahren nach den Ansprüchen 1 bis 6, wobei das in R_{A} erhaltene Polymerisat diskontinuierlich aus R_{A} ausgeführt und zusammen mit nicht umgesetzten Monomeren und noch aktiven Ziegler-Natta-Katalysatorbestandteilen in R_{B} überführt wird, und der Regulator kontinuierlich in die Übertragseinrichtung dosiert wird.

8. Verfahren nach den Ansprüchen 1 bis 7, wobei der Regulator eine Verbindung ist, die aktiven Wasserstoff enthält.

9. Verfahren nach den Ansprüchen 1 bis 8, wobei der Regulator Methanol, Ethanol, n-Propanol, Isopropanol, n-Butanol, tert-Butanol, n-Hexanol oder n-Oktanol ist.

10. Verfahren nach den Ansprüchen 1 bis 9, wobei man in einem mindestens zweistufigen Prozeß zunächst in einer ersten Stufe ein Homo- oder Copolymerisat des Propylens mit bis zu 15 Gew.-% anderer Alk-1-ene mit bis zu 8 C-Atomen herstellt und dann in einer zweiten Stufe ein Propylen-Ethylen-Copolymerisat mit einem Ethylengehalt zwischen 15 und 80 Gew.-% hinzupolymerisiert, wobei das Propylen-Ethylen-Copolymerisat zusätzlich noch weitere C₄-C₈-Alk-1-ene enthalten kann, **dadurch gekennzeichnet, daß** der letzten Reaktor der ersten Stufe R_{A} und der ersten Reaktor der zweiten Stufe R_{B} ist.

## Claims

1. A process for polymerizing C₂-C₈-alk-1-enes by means of a Ziegler-Natta catalyst system in a reactor cascade comprising at least two reactors, a homo- or copolymer of C₂-C₈-alk-1-enes being prepared in a reactor R_{A}, upstream of which one or more further reactors may be connected, the reaction mixture from R_{A} being discharged and being transferred to a subsequent reactor R_{B} and the polymerization in R_{B} and in the reactors which may be connected to R_{B} being carried out in the presence of a liquid or dissolved regulator for regulating the catalyst activity, wherein the regulator is added to the reaction mixture after discharge from R_{A} and before entry into R_{B} and in which the regulator is selected from water, phenols, carboxylic acids, sulfonic acids, primary or secondary amines, methanol, ethanol, n-propanol, isopropanol, n-butanol, tert-butanol, n-hexanol, n-octanol, cyclohexanol, benzyl alcohol and glycerol.

2. The process according to claim 1 for the preparation of homo- and/or copolymers of propylene.

3. The process according to claim 1 or 2, wherein the Ziegler-Natta catalyst system comprises, as a carrier, an inorganic oxide which has a median particle diameter of from 5 to 200 µm, a median primary particle diameter of from 1 to 20 µm and cavities or channels having an average diameter of from 0.1 to 20 µm, whose macroscopic volume fraction is from 5 to 30%, based on the total particle.

4. The process according to any of claims 1 to 3, wherein the polymerization in R_{B} takes place from the gas phase.

5. The process according to any of claims 1 to 4, wherein the polymerization is carried out in a cascade of gas-phase reactors, each of which is filled with a bed of finely divided polymer which is kept in motion by means of a stirrer.

6. The process according to any of claims 1 to 5, wherein the regulator is added to the reaction mixture in the first half of the transfer means connecting the reactors R_{A} and R_{B}.

7. The process according to any of claims 1 to 6, wherein the polymer obtained in R_{A} is discharged batchwise from R_{A} and transferred together with unconverted monomers and still active Ziegler-Natta catalyst components to R_{B}, and the regulator is metered continuously into the transfer means.

8. The process according to any of claims 1 to 7, wherein the regulator is a compound which comprises active hydrogen.

9. The process according to any of claims 1 to 8, wherein the regulator is methanol, ethanol, n-propanol, isopropanol, n-butanol, tert-butanol, n-hexanol or n-octanol.

10. The process according to any of claims 1 to 9, in which, in a process involving two or more stages, a homo- or copolymer of propylene with up to 15% by weight of other alk-1-enes of up to 8 carbon atoms is first prepared in a first stage and then, in a second stage, a propylene/ethylene copolymer containing from 15 to 80% by weight of ethylene is polymerized thereon, it being possible for the propylene/ethylene copolymer additionally to comprise further C₄-C₈-alk-1-enes, wherein the last reactor of the first stage is R_{A} and the first reactor of the second stage is R_{B}.

## Revendications

1. Procédé de polymérisation de [(C₂-C₈)-alk]-1-enes, en présence d'un système de catalyseur du type Ziegler-Natta, dans une cascade de réacteurs formée d'au moins deux réacteurs, procédé dans lequel on prépare un homopolymérisat ou copolymérisat de [(C₂-C₈)-alk]-1-enes, dans un réacteur R_{A}, qui peut être précédé de un ou plusieurs réacteurs situés en amont, puis on retire le mélange réactionnel du réacteur R_{A} et on le transfère dans un réacteur R_{B} en aval, puis, pour la régulation de l'activité du catalyseur, on effectue la polymérisation dans le réacteur R_{B} ainsi que dans les réacteurs situés en aval de R_{B} , en présence d'un agent de régulation sous forme liquide ou sous forme d'une solution, ce procédé étant **caractérisé en ce que** l'on ajoute l'agent de régulation au mélange réactionnel en aval du réacteur R_{A} et en amont du réacteur R_{B} et **en ce que** cet agent de régulation est choisi dans le groupe formé par l'eau, le phénol, l'acide carbonique, l'acide sulfonique, les amines primaires et secondaires, le méthanol, l'éthanol, le n-propanol, l'isopropanol, le n-butanol, le tert.-butanol, le n-hexanol, le n-octanol, le cyclohexanol, l'alcool benzylique et la glycérine.

2. Procédé selon la revendication 1, **caractérisé en ce que** l'on prépare des homopolymérisats et/ou copolymérisats à partir de propylène.

3. Procédé selon l'une des revendications 1 ou 2, **caractérisé en ce que** le système de catalyseur du type Ziegler-Natta contient un support formé d'un oxyde non organique qui présente un diamètre particulaire moyen compris entre 5 et 200 µm, un diamètre particulaire moyen des particules primaires compris entre 1 et 20 µm et des cavités ou canaux dont le diamètre moyen est compris entre 0,1 et 20 µm, la partie volumique, du point de vue macroscopique, de l'ensemble des particules étant de l'ordre de 5 à 30% .

4. Procédé selon l'une quelconque des revendications 1 à 3, **caractérisé en ce que** la polymérisation dans le réacteur R_{B} se forme en phase gazeuse

5. Procédé selon l'une quelconque des revendications 1 à 4, **caractérisé en ce que** la polymérisation est effectuée en cascade dans des réacteurs opérant en phase gazeuse lesquels sont garnis d'un lit formé de polymérisat sous forme de poudre fine et sont mis en mouvement par l'intermédiaire d'un agitateur.

6. Procédé selon l'une quelconque des revendications 1 à 5, **caractérisé en ce que** l'agent de régulation est ajouté au mélange réactionnel dans la première partie des organes de transfert reliant les réacteurs R_{A} et les réacteurs R_{B}.

7. Procédé selon l'une quelconque des revendications 1 à 6, **caractérisé en ce que** le polymérisat obtenu en R_{A} est retiré en discontinu de R_{A} et est transféré en R_{B} avec du monomère non transformé et des particules constitutives du catalyseur de type Ziegler-Natta, l'agent de régulation étant dosé en continu dans l'installation de transfert.

8. Procédé selon l'une quelconque des revendications 1 à 7, **caractérisée en ce que** l'agent de régulation est un composé qui contient de l'hydrogène actif.

9. Procédé selon l'une quelconque des revendications 1 à 8, **caractérisé en ce que** l'agent de régulation est choisi dans le groupe formé par le méthanol, l'éthanol, le n-propanol, l'isopropanol, le n-butanol, le tert.-butanol, le n-hexanol et le n-octanol.

10. Procédé selon l'une quelconque des revendications 1 à 9, comprenant au moins deux étapes, dans lequel on ajoute tout d'abord dans une première étape un homopolymérisat ou copolymérisat de propylène contenant jusqu'à 15% en poids d'un autre alk-1-ene ayant jusqu'à 8 atomes de carbone, puis ensuite, dans une deuxième étape y polymérise dessus un copolymérisat propylène-éthylène contenant une teneur en éthylène de 15 à 80% en poids, procédé dans lequel le copolymérisat propylène-éthylène peut en outre contenir encore d'autres [(C₄-C₈)-alk]-1-enes et étant **caractérisé en ce que** le dernier réacteur de la première étape est R_{A} et **en ce que** le premier réacteurs de la deuxième étape est R_{B}.
